Europäisches Patentamt

European Patent Office

Office européen des brevets

(11) Veröffentlichungsnummer: **0 224 152**
**A1**

(12) **EUROPÄISCHE PATENTANMELDUNG**

(21) Anmeldenummer: 86115862.4

(22) Anmeldetag: 14.11.86

(51) Int. Cl.⁴: **F02D 13/02** , F01L 9/02 ,
F01L 31/22 , F01L 1/34

(30) Priorität: 19.11.85 DE 3540902

(43) Veröffentlichungstag der Anmeldung:
03.06.87 Patentblatt 87/23

(84) Benannte Vertragsstaaten:
**DE ES FR GB IT SE**

(71) Anmelder: **BAYERISCHE MOTOREN WERKE
Aktiengesellschaft
Postfach 40 02 40 Petueiring 130 - AJ-36
D-8000 München 40(DE)**

(72) Erfinder: **Langen, Peter
Magdalenenstrasse 37
D-8000 München 19(DE)**
Erfinder: **Bönisch, Heinz-Jürgen
Freilandstrasse 22
D-8038 Gröbenzell(DE)**
Erfinder: **Kornher, Harry
Zumpestrasse 8
D-8000 München 80(DE)**

(74) Vertreter: **Bücken, Helmut
Bayerische Motoren Werke
Aktiengesellschaft Postfach 40 02 40
Petueiring 130 - AJ-30
D-8000 München 40(DE)**

(54) Arbeitsverfahren zur Steuerung mechanisch-hydraulisch betätigter Ventile für Kraft- und Arbeitsmaschinen.

(57) Ein Arbeitsverfahren zur Steuerung mechanisch-hydraulisch betätigter Ventile, deren Steuerzeiten veränderbar durch betriebspunktabhängig hydraulisch gesteuerte Ventilhübe sind, wird zur freieren Gestaltung der Ventilbewegung im gesamten Betriebsbereich der Brennkraftmaschine ergänzt durch ein Verfahren, bei dem eine die mechanisch-hydraulische Betätigung bewirkende Nockenwelle in ihrer relativen Drehlage zu einem treibenden Maschinenteil (Kurbelwelle) winkelverstellbar ist.

## Arbeitsverfahren zur Steuerung mechanisch-hydraulisch betätigter Ventile für Kraft-und Arbeitsmaschinen

Die Erfindung geht gemäß dem Oberbegriff des unabhängigen Patentanspruches von der DE-A 31 35 650 aus.

Dieser Druckschrift ist ein Arbeitsverfahren entnehmbar, bei dem mittels einer mechanisch hydraulischen Ventilsteuerung eine Veränderbarkeit der Ventilsteuerzeiten zur Anpassung an verschiedene Betriebzustände der Brennkraftmaschine durch eine Steuerung des Ventilhubes erreicht wird. Da bei dieser Ventilsteuerung eine Nockenwelle mit konstanter Phasenlage zur Kurbelwelle Verwendung findet, ist eine optimale Veränderbarkeit der Ventilsteuerzeiten nicht zu verwirklichen.

Um die Ventilbewegung im ganzen Betriebsbereich der Brennkraftmaschine frei gestalten zu können, wird für ein Arbeitsverfahren zur Steuerung mechanisch-hydraulisch betätigter Ventile für Kraft-und Arbeitsmaschinen nach dem Oberbegriff des unabhängigen Patentanspruches vorgeschlagen, daß die Nockenwelle in ihrer relativen Drehlage zu einem treibenden Maschinenteil - (Kurbelwelle) winkelverstellbar ist. Das erfindungsgemäß durch die Kombination einer Hubsteuervorrichtung mit einer mechanischen Verstellvorrichtung für die Nockenwelle erreichte Arbeitsverfahren zur Ventilsteuerung hat gegenüber einer vollhydraulischen Ventilsteuerung, wie sie beispielsweise aus der DE-A 19 16 167 bekannt ist, den erheblichen Vorteil eines wesentlich geringeren Energieaufwandes für die Steuerung, insbesondere für die Betätigung.

Eine im gesamten Betriebsbereich der Brennkraftmaschine optimale Auslegung bezüglich Beginn und Ende der Ventilbewegung wird in Ausgestaltung des Arbeitsverfahrens mit nach einem Kennfeld rechnergesteuerter Hubeinstellung der Ventile dadurch erreicht, daß die Drehlage der Nockenwelle ebenfalls rechnergesteuert wird. In vorteilhafter Weise kann damit eine Leistungsauslegung für hohe Drehzahlen mit Drehmomentauslegung bei niedrigen und mittelhohen Drehzahlen erreicht werden. Dies ergibt eine sportliche Leistungsentfaltung, verbunden mit großer Elastizität. Mit einem aus Hub-und Phasenverstellung kombinierten, rechnergesteuerten Arbeitsverfahren können beispielsweise in der Vollast bei allen Drehzahlen solche variablen Öffnungs-und Schließzeitpunkte festgelegt werden, daß damit in der Ansauganlage dynamische Vorgänge (Einlaßwelle) für eine drehmomentoptimierte Auslegung ausgelöst werden. Eine derartige Saugrohrdynamik wird insbesondere durch spätes Schließen des Einlaßventils ausgenutzt. Dagegen werden für niedrige bis mittelhohe Drehzahlen der Brennkraftmaschine die variablen Öffnungs-und Schließzeitpunkte so festgelegt, daß entweder durch frühes Schließen des Auslaßventils oder spätes Öffnen des Einlaßventils ein überschneidungsfreier Betrieb gegeben ist. Damit kann ein Rückströmen von Abgasen in das Ansaugsystem vermieden werden, woraus sich eine Drehmomentsteigerung ergibt. Schließlich kann durch spätes Öffnen des Auslaßventils Expansionsarbeit gewonnen werden. Weiter besteht schließlich die Möglichkeit einer gezielten inneren Abgasrückführung.

Mit der in Anspruch 3 beschriebenen weiteren Ausgestaltung des Arbeitsverfahren kann in vorteilhafter Weise die Dreh-bzw. Phasenlage der Nockenwelle im Bereich eines im Kennfeld abgespeicherten Betriebspunktes optimal eingestellt werden. Es ist jedoch auch eine den jeweiligen Betriebspunkt überschreitende, in benachbarte Betriebspunkte hineingehende Regelung möglich. Nach Anspruch 4 wird für die Regelung der Dreh-bzw. Phasenlage der Nockenwelle von einem mit dem Kennfeld verbundenen Rechner ermittelter Sollwert vorgegeben. Vorteilhaft ist hierbei, daß im Rechner die üblichen Werte von Parametern überlagernde Signale eines Überwa chungssystems verarbeitet werden können. So sind z. B. eine dynamische Klopfregelung sowie ein Katalysatorschutz durch rasche Senkung der Abgastemperatur einzeln oder in Kombination möglich. Die Klopfregelung durch Lastrücknahme ist wirkungsgradneutral und bewirkt zugleich eine Senkung der Abgastemperatur, was insbesondere bei Katalysatorbetrieb von Vorteil ist. Mit einer Abgastemperaturmessung ist jedoch auch ein direkter, - schneller Katalysatorschutz möglich. Die gemessene Temperatur wird im Rechner mit einer vorgegebenen Maxiamaltemperatur verglichen, bei Überschreiten dieses Wertes wird die Last durch Phasenwinkeländerung kurzzeitig zurückgenommen.

Eine besonders freie Gestaltung der Ventilbewegung im ganzen Betriebsbereich der Brennkraftmaschine erlaubt ein nach Anspruch 5 weiterentwickeltes Arbeitsverfahren, wobei durch eine bevorzugte Nockengestaltung mit extrem langer Steuerzeit insbesondere ein Einlaßventil bei einer Viertakt-Brennkraftmaschine für eine etwa einem halben Arbeitsspiel entsprechende Zeitspanne offengehalten werden kann. Durch die kombinierte Anwendung von Phasenlage und Hubsteuerung kann damit für jeden Betriebspunkt der Brennkraftmaschine sowohl die optimale Steuerzeit als auch ihre optimale Phasenlage zum Arbeitsspiel eingestellt werden. So kann durch entsprechende Wahl der Phasenlage bei jeder Last und Drehzahl der Öffnungszeitpunkt der Einlaßventile knapp vor UT des ansaugenden Kolbens gelegt werden, wodurch die Ladung mit hoher Geschwindigkeit den Brennräumen zuströmt. Dieser dynamische Ladungsvorgang kann durch entsprechende Hubabsteuerung in vorteilhafter Weise dann beendet werden, wenn der nach OT gehende Kolben die Ladung auszuschieben beginnen würde. Die Ventilöffnungszeit kann somit so gewählt werden, daß in jedem Fall ein dynamischer Nachladeeffekt erzielt wird. Durch schnelle Hubabsteuerung kann ferner in der Ansauganlage der Brennkraftmaschine eine Wellendynamik erzeugt werden, die beim nächsten Ansaugvorgang zusätzlich zur Wirkung des Unterdruckes an der Beschleunigung der Ladung mitwirkt. Mit dem wie vorstehend geschilderten erfindungsgemäßen Arbeitsverfahren kann insbesondere das Drehmoment im unteren Drehzahlbereich erheblich angehoben werden.

Die ausschließlich durch die Kontur des Nockens bewirkte, über ein halbes Arbeitsspiel einer Viertakt-Brennkraftmaschine reichende Ventilsteuerzeit kann nach Anspruch 6 zu einem Arbeitsverfahren für eine verlustarme Teillaststeuerung dienen. Durch entsprechende Drehlage der Nockenwelle einerseits und einer Hubabsteuerung der Einlaßventile relativ kurz vor Beendigung der Verdichtung der angesaugten Ladung verbleibt eine für den Teillastverbrauch entsprechende Ladung im Brennraum, während der größere Teil der angesaugten Ladung wieder in die Ansauganlage zurückgedrückt wird. Damit kann die Brennkraftmaschine zumindest in einem Teillastbereich ohne Drosselklappe betrieben werden. Weiter werden damit die Ladungswechselverluste stark vermindert, da die mit dem Ansaugen gegen eine relativ geschlossene Drosselklappe verbundene negative Arbeit weitgehend entfällt. Wird bei dieser Betriebsart der Hub des Ventils relativ gering gehalten über die gesamte Ventilöffnungszeit, ergeben sich in dem Ventilspalt hohe Strömungsgeschwindigkeiten mit Turbulenzen für eine vorteilhafte Gemischaufbereitung. Das erfindungsgemäße Arbeitsverfahren ermöglicht somit einlaßseitig eine Reduzierung der Drosselverluste auf ein Minimun sowie eine wirkungsgradgünstige Laststeuerung.

Eine günstige Gemischaufbereitung kann zusätzlich durch hohe Einlaßturbulenzen infolge eines schleichend schließenden Einlaßventiles erreicht werden. Erreicht wird dies mit einer geregelten Hubeinstellung des Einlaßventiles, wie dies aus der weiter vorne bereits genannten DE-A 19 16 167 bekannt ist.

Schließlich können Nocken mit extrem langen Steuerzeiten, wie vorstehend beschrieben, relativ steile Öffnungsflanken aufweisen, wodurch im Gaswechselsystem der Brennkraftmaschine eine Dynamikanregung durch schnelles Öffnen erzielt wird. Einlaßseitig führt dies bekanntermaßen zum sogenannten Nachladeeffekt. Auslaßseitig kann dies durch relativ spätes Öffnen des Auslaßventiles zu einem Gewinn an Expansionsarbeit am Kolben führen. Durch das schnelle Öffnen des Auslaßventiles erfolgt ein beschleunigtes Ausstoßen der Abgase, so daß eine kürzere Steuerzeit ausreichen kann und Nachteile wie ein zu hoher Restgasgehalt trotzdem vermieden sind.

Die Erfindung ist im folgenden beschrieben.

Für eine Brennkraftmaschine mit mechanisch-hydraulisch betätigten Einlaß-und Auslaßventilen wird zu deren Steuerung ein Arbeitsverfahren angewandt, bei dem für einen betriebspunktabhängigen Ventilhub des Einläß-und/oder Auslaßventiles ein hydraulisches Druckmittel einer Kammer zwischen einem von einer Nockenwelle betätigten Steuerkolben und einem ein federbelastetes Ventil betätigenden Arbeitskolben mengengesteuert ist. Die der Hubeinstellung dienende Mengensteuerung des hydraulischen Druckmittels wird von einem mit einem Kennfeld verbundenen Rechner veranlaßt. Weiter wird die abgesteuerte Druckmittelmenge in einem Druckspeicher für den Rückfluß in die Kammer bevorratet.

Die den Einlaßventilen zugeordnete Nockenwelle sowie die den Auslaßventilen zugeordnete Nockenwelle wird von einer Kurbelwelle der Brennkraftmaschine angetrieben. Jede der Nockenwellen ist mit dem Antrieb über eine zwischengeschaltete Vorrichtung derart verbunden, daß sie in ihrer relativen Drehlage zur Kurbelwelle winkelverstellbar ist. Die Dreh-bzw. Phasenlage jeder Nockenwelle wird ebenfalls rechnergesteuert. Durch das aus Hub-und Drehlagenänderung kombinierte und rechnergestützte Arbeitsverfahren wird eine freie Gestaltung der Ventilbewegung im gesamten Betriebsbereich der Brennkraftmaschine erreicht. Mit der Hubsteuerung wird die einem Betriebspunkt erforderliche Ladungsmenge entsprechende Ventilöffnungszeit bzw. Steuerzeit festgelegt. Für eine optimale Drehmoment-und Leistungsauslegung der Brennkraftmaschine dient die Phasenlage der Steuerzeit relativ zum Ansaug-und Verdichtungstakt beim Einlaßventil und für den Expansions-und Ausschubtakt beim Außlaßventil. Mit dem Arbeitsverfahren läßt sich vor allem das Maß der Überschneidung der Einlaß-und Auslaß-Steuerzeiten betriebspunktabhängig festlegen.

Zur Erzielung eines hinsichtlich Kraftstoffverbrauch und Abgasqualität optimalen Betriebes der Brennkraftmaschine in jedem Betriebspunkt wird die durch das Kennfeld betriebspunktabhängig bewirkte jeweilige Drehlage der Nockenwelle geregelt. Hierbei wird der Winkelabstand eines die momentane Drehlage repräsentierenden Impulses vorzugsweise der Einlaß-Nockenwelle von einer konstanten Bezugsmarke der Kurbelwelle durch die Anzahl der Impulse gemessen, die von einem zahnkranzgesteuerten Impulsgenerator geliefert werden, wobei die einer Zähnezahl des Zahnkranzes entsprechenden Impulse mit dem in einem Regelgerät vorgegebenen, betriebspunktabhängigen Sollwert vorbestimmter Zähnezahlen verglichen werden. Durch dieses dem Rechner nachgeschaltete Regelverfahren können dem Regelgerät nicht nur aus dem Kennfeld gewonnene Sollwerte, sondern auch aus weiteren, das Kennfeld überlagernde Eingangsgrößen gebildete Sollwerte vorgegeben werden. Dieses Arbeitsverfahren gestattet beispielsweise eine dynamische Klopfregelung durch Lastrücknahme, die wirkungsgradneutral ist und die nicht mit einer Abgastemperaturerhöhung gekoppelt ist. In Verbindung mit einem Katalysatorbetrieb bietet diese Art der Klopfregelung den Vorteil eines relativ kühlen Abgases. Weiter ist mit dem Arbeitsverfahren durch eine Abgastemperaturmessung auch ein direkter schneller Katalysatorschutz möglich, wobei bei Überschreiten einer vorbestimmten Abgastemperatur die Last durch Drehlagenänderung kurzzeitig zurückgenommen werden kann. Schließlich können für das Arbeitsverfahren die Variantionsmöglichkeiten der Öffnungs-und Schließzeitpunkte von Einlaßventilen einer Viertakt-Brennkraftmaschine nocht dadurch vergrößert werden,· daß jedes Einlaßventil bei maximalem, konstantgehaltenem Druckmittel in der Kammer durch den jeweiligen Nocken der Nockenwelle, für eine etwa einem halben Arbeitsspiel entsprechende Zeitspanne offengehalten wird. Wird dabei die Dreh-bzw. Phasenlage der Nockenwelle so gewählt, daß die Einlaßventile bei niederer Last und Drehzahl der Brennkraftmaschine relativ kurz vor Beendigung des das Ansaugen und bei niederer Last und Drehzahl der Brennkraftmaschine relativ kurz vor Beendigung des das Ansaugen und Verdichten umfassenden halben Arbeitsspieles - schließen, ist eine verlustarme Teillaststeuerung erreicht. Dieses Arbeitsverfahren ermöglicht ein Ausschieben des größten Teils der Ladung in der Teillast, so daß die Brennkraftmaschine im unteren Teillastbereich ohne Drosselklappe betrieben werden kann. Dies ergibt weiter verminderte Ladungswechselverluste, wobei anstelle der durch den Saugrohrunterdruck hervorgerufenen negativen Arbeit lediglich Strömungsverluste entstehen.

Höhere Lasten werden durch frühzeitiges Absteuern des Ventilhubes erreicht und damit die Schließzeitpunkte variiert. Die Variation der Ventil-Öffnungszeitpunkte durch kurzzeitiges, lastpunktabhängiges Ablassen von Hydraulikflüssigkeit aus dem Druckraum während der vom Nocken bewirkten anfänglichen Verlagerung des Arbeitskolbens ist zwar denkbar, hat jedoch den Nachteil, daß mit der relativ schlagartig erfolgenden Beendigung des Abfließens von Hydraulikflüssigkeit die am Arbeitskolben anliegende Nockenbahn einer materialermüdenden Stoßbelastung ausgesetzt ist. Dagegen bietet das erfindungsgemäße Arbeitsverfahren neben eines wesentlich geringeren Energiebedarfes für die Betätigung der Ventile den weiteren wesentlichen Vorteil der freien Variation der Ventil-Öffnungszeitpunkte für Ein-und Auslaßventile, indem die Öffnungszeitpunkte ohne den vorbeschriebenen, nachteiligen Eingriff in die Hydraulik mittels der winkelverstellbaren Nockenwelle gewählt werden.

**Ansprüche**

1. Arbeitsverfahren zur Steuerung mechanisch-hydraulisch betätigter Ventile für Kraft-und Arbeitsmaschinen,
-bei dem für einen betriebspunktabhängigen Ventilhub ein hydraulisches Druckmittel in einer Kammer zwischen einem von einer Nockenwelle betätigten Steuerkolben und einem ein federbelastetes Ventil betätigenden Arbeitskolben mengengesteuert ist, wobei
-die abgesteuerte Druckmittelmenge in einem Druckspeicher für den Rückfluß in die Kammer bevorratet wird, dadurch gekennzeichnet,
-daß die Nockenwelle in ihrer relativen Drehlage zu einem treibenden Maschinenteil (Kurbelwelle) winkelverstellbar ist.

2. Arbeitsverfahren nach Anspruch 1, mit nach einem Kennfeld rechnergesteuerter Hubeinstellung der Ventile, dadurch gekennzeichnet,
-daß die Drehlage der Nockenwelle ebenfalls rechnergesteuert wird.

3. Arbeitsverfahren nach den Ansprüchen 1 und 2, dadurch gekennzeichnet,
-daß die durch das Kennfeld betriebspunktabhängig bewirkte Drehlage der Nockenwelle geregelt wird, wobei
-der Winkelabstand eines die momentane Drehlage repräsentierenden Impulses der Nockenwelle von einer konstanten Bezugsmarke des treibenden Maschinenteils (Kurbelwelle) durch eine Anzahl Impulse gemessen wird,
-die von einem zahnkranzgesteuerten Impulsgenerator geliefert werden,
-wobei die einer Zähnezahl des Zahlkranzes entsprechenden Impulse mit dem in einem Regelgerät vorgegebenen, betriebspunktabhängigen Sollwert vorbestimmter Zähnezahlen verglichen werden.

4. Arbeitsverfahren nach Anspruch 3, dadurch gekennzeichnet, -daß der Sollwert von einem mit dem Kennfeld verbundenen Rechner dem Regelgerät vorgegeben wird,

-der den Sollwert in Abhängigkeit von Eingangsgrößen wie Drehzahl, Lastsignal und gegebenenfalls durch ein Überwachungssignal festlegt.

5. Arbeitsverfahren nach den Ansprüchen 1 bis 4, für eine Viertakt-Brennkraftmaschine mit einer den Einlaßventilen zugeordneten Nockenwelle, dadurch gekennzeichnet,
-daß jedes Einlaßventil bei maximalem, konstantgehaltenem Druckmittel in der Kammer durch den jeweiligen Nocken der Nockenwelle für eine etwa einem halben Arbeitsspiel entsprechende Zeitspanne offengehalten wird.

6. Arbeitsverfahren nach Anspruch 5, dadurch gekennzeichnet,
-daß die Drehlage der Nockenwelle so gewählt wird,
-daß die Einlaßventile bei niederer Last und Drehzahl relativ kurz vor Beendigung des das Ansaugen und Verdichten umfassenden halben Arbeitsspiels - schließen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 135 650 (BOSCH)<br>* Seite 9, Zeile 18 - Seite 11, Zeile 23; Seite 12, Zeilen 2-11; Abbildungen 1,2,4 *<br>--- | 1,2 | F 02 D 13/02<br>F 01 L 9/02<br>F 01 L 31/22<br>F 01 L 1/34 |
| A | DE-A-3 305 059 (NAKAMURA)<br>* Seite 10, Zeile 9 - Seite 11, Zeile 20; Abbildung 2 *<br>--- | 1,2 | |
| A | US-A-4 476 823 (WILLIAMS)<br>* Spalte 4, Zeile 26 - Spalte 5, Zeile 15; Abbildungen 1-3 *<br>--- | 1 | |
| A | US-A-4 258 672 (HIETIKKO)<br>* Spalte 7, Zeile 45 - Spalte 8, Zeile 24; Abbildung 1 *<br>--- | 1 | RECHERCHIERTE SACHGEBIETE (Int. Cl.4) |
| A | EP-A-0 027 949 (RENAULT)<br>* Seite 7, Zeile 17 - Seite 8, Zeile 18; Seite 9, Zeilen 7-13; Seite 10, Zeilen 28-34; Seite 12, Zeilen 19-26; Abbildungen 1-4 *<br>--- | 1 | F 01 L<br>F 02 D |
| A | WO-A-8 202 574 (COLLISON)<br>* Seite 4, Zeile 18 - Seite 5, Zeile 16; Abbildung 1 *<br>----- | 1 | |

Der vorliegende Recherchenbericht wurde für alle Patentansprüche erstellt.

| Recherchenort | Abschlußdatum der Recherche | Prüfer |
|---|---|---|
| DEN HAAG | 23-02-1987 | LEFEBVRE L.J.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument